Europäisches Patentamt

European Patent Office

Office européen des brevets

(19)

(11) Numéro de publication: **0 286 157**
**A1**

## (12) DEMANDE DE BREVET EUROPEEN

(21) Numéro de dépôt: 88200515.0

(22) Date de dépôt: 21.03.88

(51) Int. Cl.⁴: **H04N 11/00**

(30) Priorité: 24.03.87 FR 8704070

(43) Date de publication de la demande:
'12.10.88 Bulletin 88/41

(84) Etats contractants désignés:
**DE FR GB**

(71) Demandeur: **Laboratoires d'Electronique et
de Physique Appliquée L.E.P.
3, Avenue Descartes
F-94450 Limeil-Brévannes(FR)**

(84) **FR**

(71) Demandeur: **N.V. Philips'
Gloeilampenfabrieken
Groenewoudseweg 1
NL-5621 BA Eindhoven(NL)**

(84) **DE GB**

(72) Inventeur: **Fonsalas, Frédéric
Société Civile S.P.I.D 209 rue de l'Université
F-75007 Paris(FR)**
Inventeur: **Lejard, Jean Yves
Société Civile S.P.I.D 209 rue de l'Université
F-75007 Paris(FR)**
Inventeur: **Hayet, Pascal
Société Civile S.P.I.D 209 rue de l'Université
F-75007 Paris(FR)**
Inventeur: **Le Queau, Marcel
Société Civile S.P.I.D 209 rue de l'Université
F-75007 Paris(FR)**

(74) Mandataire: **Chaffraix, Jean et al
Société Civile S.P.I.D. 209, rue de l'Université
F-75007 Paris(FR)**

(54) **Système de transmission d'images de télévision à haute définition par un canal à bande passante étroite, ainsi qu'un émetteur et un récepteur convenant pour le système.**

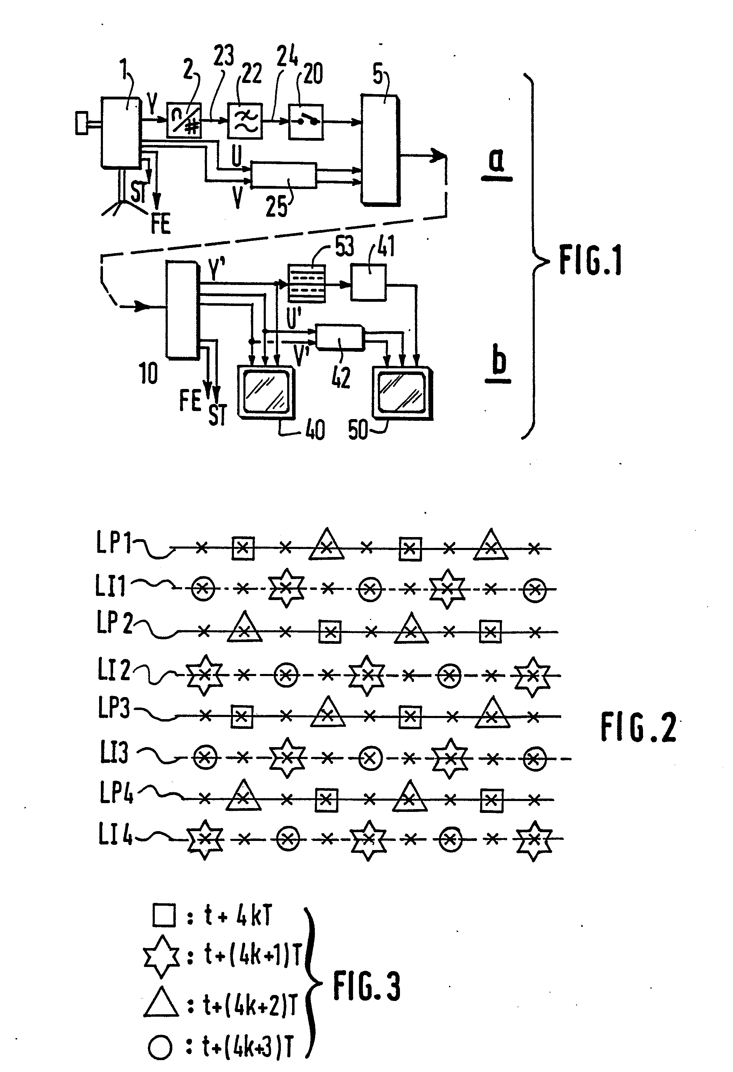

(57) Ce système de transmission comporte d'une part, une partie émission (Fig.1a) constituée d'un dispositif (1) pour fournir lesdites images constituées par un ensemble de points ou échantillons répartis sur des lignes paires et impaires d'un organe de filtrage (22) pour filtrer lesdits échantillons, d'un circuit de sous-échantillonnage (20) pour prélever certains échantillons à la sortie de l'organe de filtrage et d'un circuit émetteur (5) pour transmettre sur le canal les échantillons prélevés et d'autre part au moins une partie réception (Fig.1b) constituée d'un circuit récepteur (10) pour recevoir les échantillons prélevés, d'un organe d'interpolation (41) pour reconstituer des échantillons à partir des échantillons reçus et d'un premier circuit de visualisation (50) pour transformer les échantillons reconstitués en une image restituée de haute définition.

FIG.1

## "Système de transmission d'images de télévision à haute définition par un canal à bande passante étroite, ainsi qu'un émetteur et un récepteur convenant pour le système".

La présente invention concerne un système de transmission d'images de télévision à haute définition par un canal à bande passante étroite, système comportant, d'une part, une partie émission constituée d'un dispositif pour fournir lesdites images constituées par un ensemble de points ou échantillons répartis sur des lignes paires et impaires d'un organe de filtrage pour filtrer lesdits échantillons, d'un circuit de sous-échantillonnage pour prélever certains échantillons à la sortie de l'organe de filtrage et d'un circuit émetteur pour transmettre sur le canal les échantillons prélevés et d'autre part au moins une partie réception constituée d'un circuit récepteur pour recevoir les échantillons prélevés, d'un organe d'interpolation pour reconstituer des échantillons à partir des échantillons reçus et d'un premier circuit de visualisation pour transformer les échantillons reconstitués en une image restituée de haute définition.

La présente invention concerne aussi un émetteur et un récepteur convenant pour le système.

De tels systèmes sont bien connus et sont susceptibles de trouver d'importantes applications notamment pour la transmission d'images à haute définition compatibles avec les standards "MAC" et plus particulièrement le standard "D2-MAC" (avis 601 du C.C.I.R.).

Un système connu de ce genre est décrit dans l'article "A SINGLE CHANNEL HDTV BROADCAST SYSTEM - THE MUSE-" de Yuichi Ninomiya et autres..., paru dans la revue "NHK LABORATORIES NOTE" série 304 de septembre 1984. Ce système MUSE non adapté aux procédés précités peut l'être aisément en modifiant d'une manière linéaire ses différents paramètres caractéristi ques. Ce système connu utilise, pour transmettre les échantillons d'une image, une structure d'échantillonnage qui s'étale sur quatre trames. Des points appartenant à différentes positions spatiales sont transmis dans ces quatre trames consécutives ; lorsque l'image traitée est fixe on obtient une bonne qualité. Par contre, la transmission en quatre trames ne permet pas d'obtenir une bonne qualité pour la restitution d'images mobiles dont des parties se déplacent de façon perceptible pendant quatre trames successives.

Un des buts de la présente invention est de remédier dans une certaine mesure à cet inconvénient et donc de pouvoir restituer, avec une meilleure qualité des images mobiles.

Les images à haute définition ayant un format 16/9 (rapport largeur sur hauteur) proche du format cinéma, s'impose alors l'exigence que les nombres de points restitués selon les axes horizontaux et verticaux de l'image soient dans le même rapport.

Un autre but de cette invention est de satisfaire cette exigence.

Pour atteindre ces buts, un système du genre mentionné dans le préambule est remarquable en ce que le circuit d'échantillonnage est conçu pour prélever sur des lignes de même parité un échantillon sur des successions de n échantillons successifs dans une première trame et l'échantillon suivant de ces successions dans une deuxième trame.

Outre la possibilité de transmettre des images de haute définition, on s'impose aussi une compatibilité avec un système comportant par exemple des récepteurs de type D2 MAC/paquet.

Une caractéristique importante de l'invention permet d'assurer cette compatibilité avec les récepteurs du type précité. Un tel système est en outre remarquable en ce que le circuit d'échantillonnage est prévu pour fournir des échantillons au circuit émetteur dans un ordre dit "ordre compatible" cet ordre étant défini en considérant les échantillons lignes après lignes alternativement tandis que au moins une partie réception comporte, connecté pratiquement en sortie du circuit récepteur, un deuxième circuit de visualisation normale pour restituer une image à définition normale et que chaque partie réception comporte un organe de changement d'ordre placé entre le circuit récepteur et l'organe d'interpolation.

La description suivante accompagnée des dessins ci-annexés, le tout donné à titre d'exemple non limitatif fera bien comprendre comment l'invention peut être réalisée. Sur les dessins :

La figure 1 représente un système de transmission conforme à l'invention.

La figure 2 représente la structure d'échantillonnage d'un système de l'art antérieur.

La figure 3 est une légende pour la figure 2.

La figure 4 représente les points dans l'espace de Fourier autour desquels se produisent les spectres d'image et qui sont relatifs à la structure de la figure 2.

La figure 5 représente un support possible de la fonction de transfert du système de l'art connu.

La figure 6 représente la structure d'échantillonnage conforme à l'invention.

La figure 7 est une légende pour la figure 6.

La figure 8 représente les points de l'espace de Fourier autour desquels se produisent les spectres d'image et qui sont relatifs à la figure 6.

La figure 9 représente un support de la fonction de transfert d'un organe de filtrage convenant pour l'invention.

La figure 10 montre en détail la structure de l'organe de filtrage.

La figure 11 montre en détail la structure du circuit de sous-échantillonnage.

La figure 12 montre l'"ordre compatible" pour les échantillons.

La figure 13 montre en détail la structure de l'organe d'interpolation.

La figure 14 montre en détail la structure d'un organe de changement d'ordre.

Le système de la figure 1 comporte une porte émission montrée en a et une partie réception montrée en b.

Sur cette figure la référence 1 indique une caméra de télévision à haute définition fournissant sous forme analogique les signaux de luminance Y et de différence de couleur U et V. Dans le présent exposé, on s'intéressera surtout aux signaux de luminance car ce sont eux qui posent le plus de problème de transmission. Un traitement similaire à celui qui va être décrit peut être effectué sur les signaux U et V avec cependant une cadence beaucoup moins élevée. Un convertisseur analogique-numérique 2 fournit différents échantillons numériques dont chacun représente la luminance d'un point d'image. Ces échantillons surgissent à des instants t, t + TP, t + 2TP,... avec TP = 1/(54 MHz) et définissent une image entrelacée comportant 1250 lignes, ce qui représente une définition double des images normales à 625 lignes classiques, tant en direction verticale qu'en direction horizontale. Comme on veut transmettre cette image au moyen d'un circuit de transmission 5-10 fonctionnant selon une norme MAC et formé d'un circuit émetteur 5 et d'un circuit récepteur 10, il ne faut transmettre que quelques-uns de ces échantillons ; pour cela on utilise un circuit de sous-échantillonnage 20 précédé d'un organe de filtrage 22 muni d'une borne d'entrée 23 pour être raccordé à la sortie du convertisseur 2 et d'une borne de sortie 24 pour être connecté au circuit 20. Les signaux U et V subissent le même traitement effectué par l'organe 25 à une fréquence deux fois moindre.

Le circuit de réception 10 fournit les signaux de luminance et de différence de couleur Y', U' et V' respectivement d'une part à un téléviseur 40 pour la restitution d'une image de télévision à définition normale et d'autre part, à des organes d'interpolation 41 et 42 pour élaborer des points supplémentaires à partir des points reçus afin qu'un deuxième téléviseur 50 fournisse une image à haute définition.

Selon la caractéristique précitée assurant la compatibilité, il est prévu du côté réception un organe de changement d'ordres 53 qui modifie l'ordre d'apparition des échantillons à la sortie du circuit récepteur 10 d'une manière qui sera expliquée plus loin dans le présent exposé.

Pour bien comprendre l'intérêt de la présente invention, on a représenté à la figure 2 la structure de l'échantillonnage du système connu de la référence précitée. Tous les échantillons à la sortie du convertisseur 2 sont repérés par des croix et répartis selon des lignes paires LP en trait continu ...LP1, LP2, LP3, LP4 ... et des lignes impaires LI en tirets LI1, LI2, LI3, LI4. Le circuit d'échantillonnage du système connu transmet dans une première trame transmise à l'instant t et aux instants (t + 4kT) avec k = 0, 1, 2... et T étant la durée d'une trame, tous les échantillons entourés d'un carré. Ces échantillons sont prélevés sur les lignes paires un sur quatre et en quinconce ; le circuit d'échantillonnage transmet ensuite dans une deuxième trame à l'instant t + T et aux instants t + (4k + 1)T tous les échantillons entourés d'une étoile. Ces échantillons sont prélevés sur les lignes impaires un sur quatre et en quinconce et décalés horizontalement d'un cran par rapport à ceux transmis à l'instant t.

Puis à l'instant t + 2T et aux instants t + (4k + 2)T dans une troisième trame, sont transmis les échantillons entourés d'un triangle. Ces échantillons sont prélevés sur les lignes paires un échantillon sur quatre et décalés horizontalement de deux crans par rapport aux échantillons entourés d'un carré.

Enfin à l'instant t + 3T et aux instants t + (4k + 3)T dans une quatrième trame sont transmis les échantillons entourés d'un cercle. Ces échantillons sont prélevés sur les lignes impaires un sur quatre et décalés horizontalement de deux crans par rapport aux échantillons entourés d'une étoile.

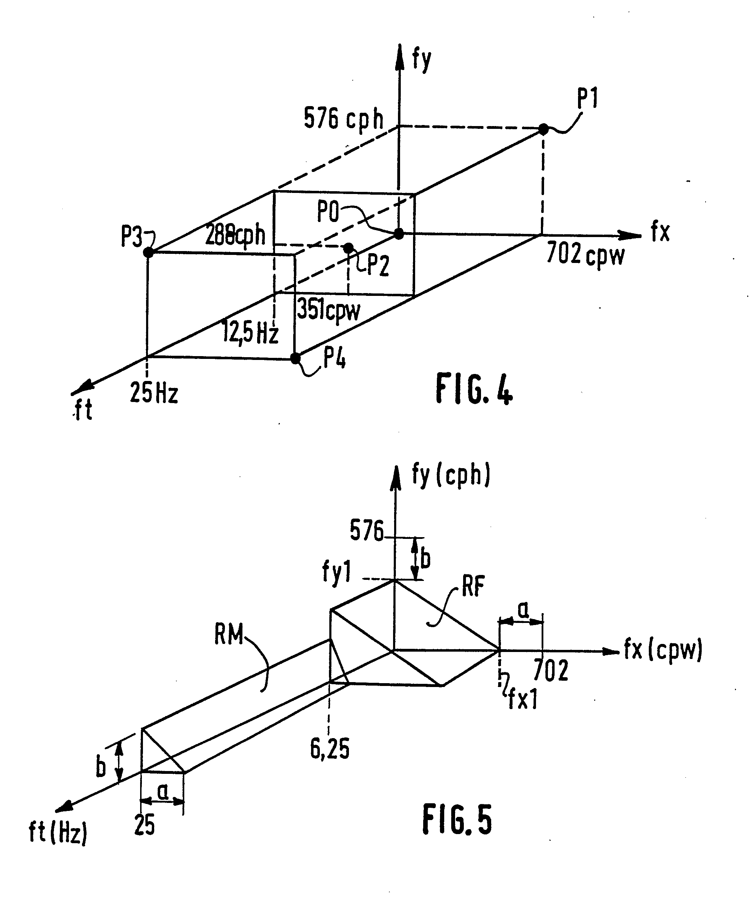

La figure 3 est une légende qui rappelle la transmission par trame des différents échantillons.

A toute structure d'échantillonnage périodique spatio-temporelle correspond aussi une structure périodique dans le domaine de Fourier. On pourra à ce sujet consulter l'article de KRETZ et SABATIER intitulé "Echantillonnage des images de télévision" paru dans les Annales de Télécommunications 36, No.3-4, 1981, pages 231-273. On montre alors qu'à la structure de la figure 2 correspond la structure dans le domaine de Fourier montrée à la figure 4. Sur cette figure on a représenté par P0, P1, P2, P3 et P4 les points qui sont les centres des spectres spatio-temporels des images. Ces points sont repérés par des axes fx, fy et ft gradués respectivement en cpw (unité de définition horizontale correspondant aux cycles par largeur d'image) en cph (unité correspondant aux cycles par hauteur d'image) et en Hz.

Le point P0 est à l'origine. Le point P1 est défini par fx = 702 cpw, fy = 576 cph et ft = 0, le point P2 par fx = 351 cpw, fy = 288 cph et ft = 12,5 Hz, le point P3 par fx = 0, fy = 576 cph et ft = 25 Hz, le point P4 par fx = 702 cpw, fy = 0 et ft = 25 Hz.

Pour éviter le chevauchement des spectres qui se produit autour de ces points, on voit qu'il est nécessaire de procéder à un filtrage avant de sous-échantillonner le signal.

La figure 5 représente un domaine de filtrage convenant pour la structure d'échantillonnage de la figure 4. Ce domaine de filtrage est un volume à l'intérieur duquel la fonction de transfert d'un filtrage idéal vaudrait "1" et à l'extérieur duquel cette fonction serait nulle.

Ce domaine de filtrage est composé de deux régions RF et RM. La région RF est placée au voisinage du plan de fréquences temporelles nulles et son extension selon les directions fx et fy est plus importante que la deuxième région RM située dans des fréquences temporelles plus élevées. En pratique ces deux régions correspondent pour la première RF au cas des images fixes ou animées de mouvements lents et la seconde RM au cas des images en mouvement rapide. La demanderesse s'est rendu compte, puisque l'on doit éviter tout recouvrement de spectre après sous-échantillonnage, que l'on aboutit à une condition restrictive sur l'extension maximale de ces deux zones RF et RM selon les axes fy et fx.

Plus précisément la somme des résolutions, selon ces axes, concernant les images quasi-statiques et mobiles ne doit pas excéder la demi-fréquence d'échantillonnage. Ainsi en se reportant à la figure 5, la région RF coupe l'axe fx en un point fx1 et l'axe fy en un point fy1 tandis que la région RM s'étale selon l'axe fx jusqu'à une distance "a" et selon l'axe fy jusqu'à une distance "b". Si on appelle d'une part Rvf et Rhf les résolutions verticales et horizontales des images fixes et d'autre part Rvm et Rhm les résolutions verticales et horizontales des images mobiles, on a :

Rhf = fx1
Rhm = a
Rvf = fy1
Rvf = b

En considérant les coordonnées du point P1 on a au mieux :

Rhf + Rhm = 702 cpw
Rvf + Rvm = 576 cph

En choisissant des valeurs jugées convenables sur des images naturelles pour les paramètres a, b, fx1, fy1, on peut obtenir par exemple :

Rhf = 421,2 cpw     Rvf = 345,6
Rhm = 280,8 cpw     Rvm = 230,4

Outre la condition de somme mentionnée on doit bien voir que le point P2 limite en fy et fx le déploiement de la région RM tout en la prolongeant vers ft = 0. Ceci explique le premier inconvénient précité qui, on le rappelle consiste en une mauvaise restitution des images mobiles.

Le deuxième inconvénient découle des valeurs Rhf et Rvf précitées. En effet si on fait leur rapport $\rho$ on trouve :

$$\rho = \frac{Rhf}{Rvf} = 1,22$$

Ce rapport est à rapprocher du format cinéma 16/9. Pour avoir une bonne vision de ce format on veut voir autant de points en horizontale qu'en verticale ; le rapport $\rho$ est donc trop faible.

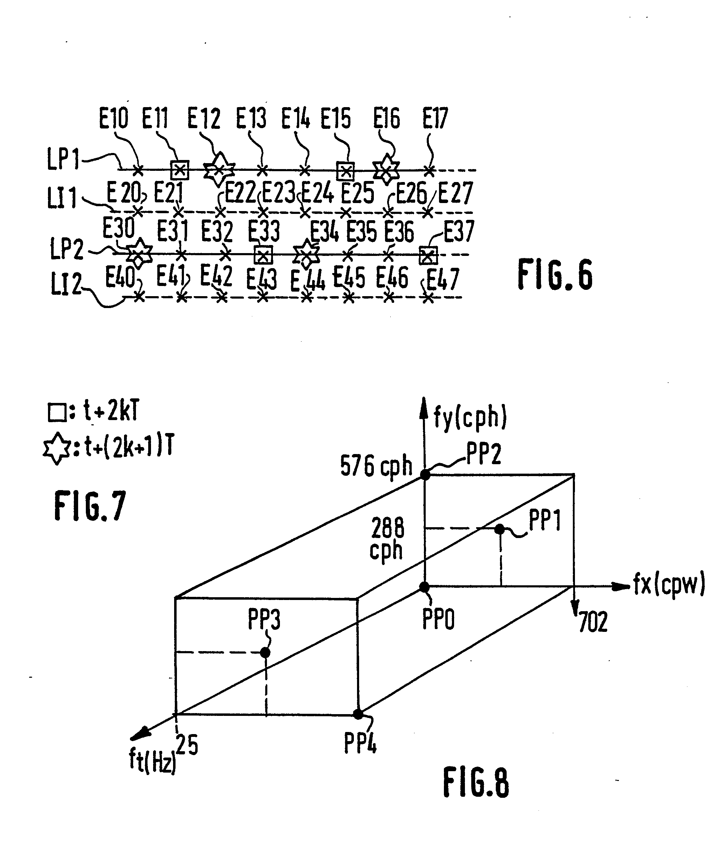

Pour éviter ces inconvénients, conformément à l'invention, le circuit de sous-échantillonnage 20 est conçu pour prélever, parmi les échantillons successifs ...E10, E11, E12, E13, E14, E15... répartis sur une première ligne LP1, et E20, E21, E22, E23... sur une deuxième ligne LI1, ...E30, E31, E32... sur une troisième ligne LP2 et ...E40, E41, E42... sur une quatrième ligne LI2 etc... (voir figure 6), d'une part, un premier échantillon indiqué par un carré E11, E15, ... E33, E37 sur une succession de quatre échantillons faisant partie des lignes paires et pour le transmettre dans une première trame (trame MAC) et d'autre part, l'échantillon suivant de cette succession indiqué par une étoile E12, E16, E30, E34 pour le transmettre dans une deuxième trame.

La figure 7 rappelle que les échantillons entourés d'un carré sont transmis dans une première trame aux instants t + 2kT et ceux entourés d'une étoile dans une deuxième trame aux instants t + (2k + 1)T.

A cette structure d'échantillonnage de la figure 6 correspond une structure périodique dans le domaine de Fourier. Les points PP0, PP1, PP2, PP3 et PP4 sont les points autour desquels se produisent les spectres spatio-temporels des images. Les coordonnées de ces points sont les suivantes : PP0 : (0 Hz, 0 cph, 0 cpw)PP1 : (0,288 cph, 350 cpw) PP2 : (0 Hz, 576 cph, 0 cpw)PP3 : (25 Hz, 288 cph, 350 cpw) PP4 : (25 Hz, 0 cph, 502 cpw).

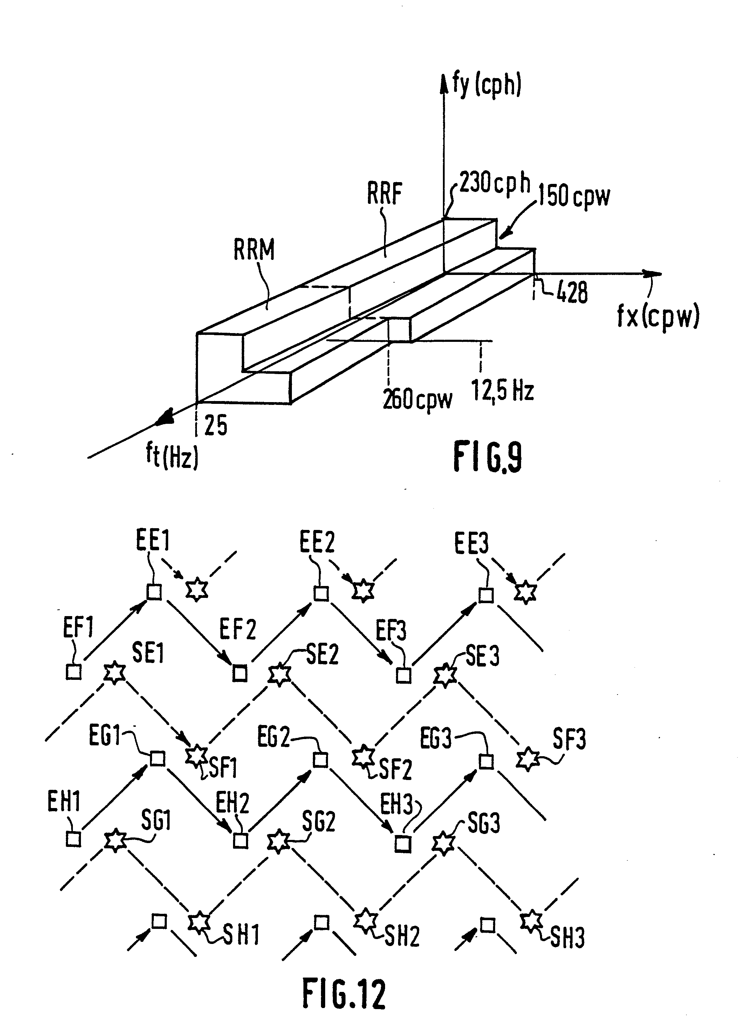

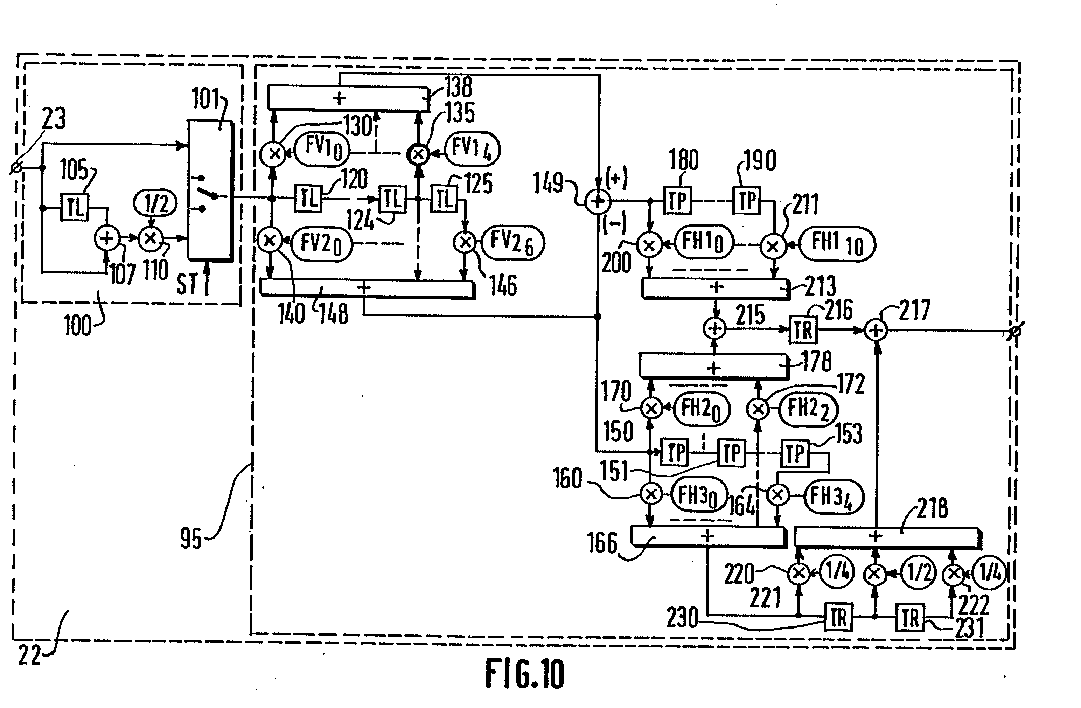

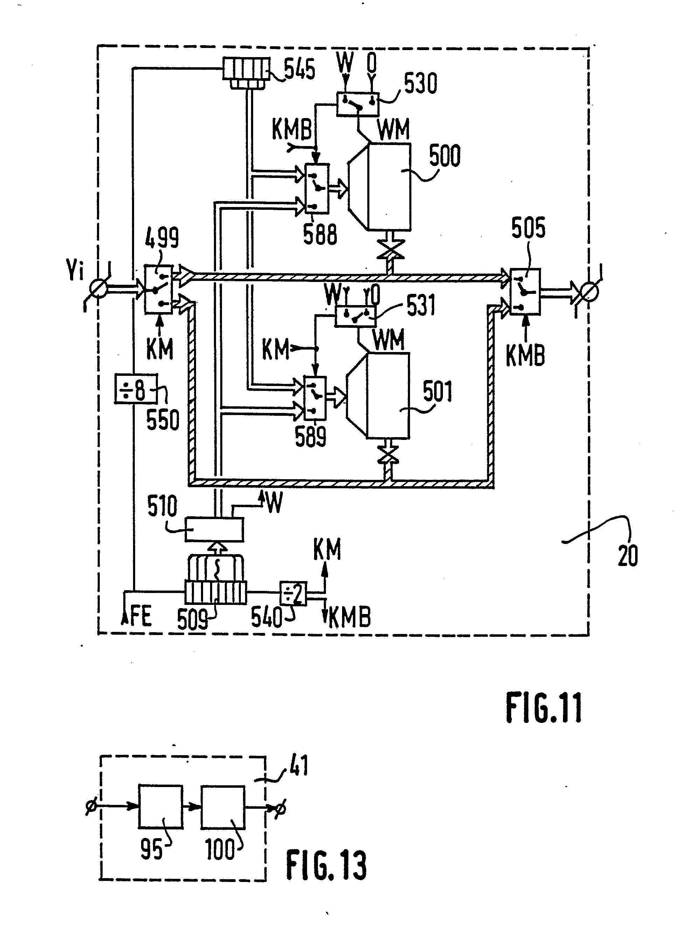

La figure 9 montre le support de la fonction de transfert retenue pour cette structure d'échantillonnage. Aux formes triangulaires montrées à la figure 5 on a préféré des formes rectangulaires plus facilement approchées par les filtres représentés aux figures 10 et 13. On a repéré par RRF la région relative aux images statiques et par RRM la région relative aux images mobiles. Ces deux régions sont séparées par un plan défini $f_T$ = 12,5 Hz. La région RRF est limitée entre les plans $f_T$ = 0 Hz et 12,5 Hz par un plan fy = 230 cph pour fx = 0 à 130 cpw et par un plan fy = 130 cph pour fx = 130 à 428 cpw. La région RRM est limitée entre les plans $f_T$ = 12,5 Hz à 25 Hz par le même plan fy = 230 cph pour fx = 0 à 130 cpw et par un plan fy = 130 cph pour fx = 130 à 260 cpw. On constate que le rapport $\rho$ devient égal à :

$$\rho = \frac{428}{230} = 1,9$$

valeur très proche de ce qui est souhaité (1,77) pour un format cinéma.

La figure 10 représente le schéma d'un organe de filtrage convenant au système de l'invention. Il se compose d'une partie de filtrage 95 précédée d'une partie de transformation 100 pour transformer les images qui se présentent à la borne 23 sous la forme d'images entrelacées et images non entrelacées. Un commutateur 101 commandé par un signal ST issu de la caméra 1 sélectionne au rythme des trames, soit la ligne de points d'image directement fournie à la sortie du convertisseur 2, soit une ligne de points d'image obtenue par interpolation. Cette interpolation est effectuée au moyen d'un élément à retard 105 amenant un retard TL (égal à la durée d'une ligne) d'un additionneur 107 pour additionner les signaux de la ligne courante (à la borne 23) avec la ligne retardée. Cette somme est ensuite divisée par deux pour que la valeur reste normalisée par rapport à la ligne courante ; pour cela, on utilise un multiplicateur 110 multipliant par 1/2 le signal de sortie de l'additionneur 107.

Le signal, ou l'échantillon, sélectionné par le commutateur 101 est donc, soit l'échantillon courant, soit l'échantillon interpolé ; il est appliqué à une première chaîne d'éléments à retard 120... 124, 125 amenant chacun un re tard égal à TL. A cette chaîne est associée d'une part, une série de multiplieurs 130 à 135 pour multiplier par des coefficients $FV1_0$ à $FV1_4$ les échantillons prélevés aux entrées des différents éléments à retard 120... 125 ; un additionneur 138 effectue la somme de tous les résultats fournis par ces multiplieurs 130 à 135. A cette chaîne est associée d'autre part une autre série de multiplieurs 140 à 146 par des coefficients $FV2_0$ à $FV2_6$ pour multiplier les échantillons à l'entrée de l'élément 120, à la sortie de cet élément 120 et aux sorties des éléments 121 à 125. Un additionneur 148 effectue la somme des résultats fournis par ces multiplieurs 140 à 146. L'échantillon numérique élaboré par l'additionneur 148 est appliqué d'une part à l'entrée (-) d'un organe de soustraction 149 pour être soustrait de l'échantillon à la sortie de l'additionneur 138 et d'autre par à une deuxième chaîne d'éléments à retard 150, 151,... 153 dont chacun amène un retard TP égal à la période d'échantillonnage pour les points d'image. Une première série de multiplieurs 160 à 164 multiplie par $FH3_0$... $FH3_4$ les différents échantillons à l'entrée de l'élément 150, à sa sortie et aux sorties des éléments suivants. Un additionneur 166 effectue la somme des résultats fournis par ces multiplieurs 160 à 164. Une deuxième série de multiplieurs 170,... 172 est associée à cette chaîne d'éléments à retard (150... 153) pour multiplier par des coefficients $FH2_0$... $FH2_2$ les différents échantillons présents aux entrées des éléments 150 à 152. Un additionneur 178 fournit la somme des résultats de ces multiplieurs 170 à 172.

Une troisième chaîne d'éléments à retard 180 à 190 dont chacun amène un retard égal à TP fournit différents échantillons retardés à des multiplieurs 200 à 211 pour les multiplier par les coefficients $FH1_0$ à $FH1_{10}$ ; un additionneur 213 effectue la somme des résultats de ces multiplieurs. Un additionneur 215 effectue la somme des échantillons fournis par les additionneurs 178 et 213. Cette somme est retardée par l'élément de retard 217 amenant un retard TR égal à la durée T d'une trame, avant d'être additionnée par un additionneur 217 avec un échantillon provenant d'un autre additionneur 218. Cet additionneur reçoit les échantillons de multiplieurs 220, 221 et 222 qui multiplient respectivement par 1/4, 1/2, 1/4 les échantillons provenant de l'additionneur 166, ces mêmes échantillons retardés par un élément 230 et par un autre élément 231 amenant chacun un retard égal à TR. La sortie de l'additionneur 217 est raccordée à la borne 24.

Les valeurs des coefficients sont les suivantes :

$FV1_0 : - 1/16$     $FV2_0 : 1/16$

$FV1_1 : 4/16$     $FV2_1 : 2/16$

$FV1_2 : 10/16$     $FV2_2 : 3/16$

$FV1_3 : 4/16$     $FV2_3 : 4/16$

$FV1_4 : - 1/16$     $FV2_4 : 3/16$

$FV2_5 : 2/16$

$FV2_6 : 1/16$

$FH1_0 : 1/64$     $FH2_0 : 1/4$     $FH3_0 : - 1/8$

$FH1_1 : 2/64$     $FH2_1 : 1/2$     $FH3_1 : 0$

$FH1_2 : 5/64$     $FH2_2 : 1/4$     $FH3_2 : 1/4$

$FH1_3 : 8/64$     $FH3_3 : 0$

$FH1_4 : 10/64$     $FH3_4 : - 1/8$

$FH1_5 : 12/64$

$FH1_6 : 10/64$

$FH1_7 : 8/64$

$FH1_8 : 5/64$

$FH1_9 : 2/64$

$FH1_{10} : 1/64$

La figure 11 montre en détail le circuit de sous-échantillonnage 20.

Les échantillons de luminance filtrés par l'organe 22 se présentent à l'entrée d'un démultiplexeur 499 en vue d'être emmagasinés dans l'une des deux mémoires 500 et 501. Cet emmagasinage a lieu tour à tour dans ces deux mémoires, de sorte que lorsqu'une mémoire est en écriture, l'autre mémoire est en lecture. Un multiplexeur 505 permet d'appliquer les in formations de l'une des mémoires 500 et 501 à l'entrée du circuit 5. La position des démultiplexeur 499 et multiplexeur 505 est fixée respectivement par des signaux complémentaires KM et KMB indiquant ainsi que lorsque les informations se trouvent à l'accès de données de la mémoire 500, l'accès de données de la mémoire 501 se trouve en relation avec l'entrée du circuit 5 et que lorsque l'accès de données de la mémoire 500 est à l'entrée du circuit 5, les informations sont aux accès de données de la mémoire 501.

L'adressage en écriture de ces mémoires 500 et 501 est effectué au moyen d'un compteur 509 auquel est associé un circuit de transcodage 510, ceci afin d'effectuer un adressage sélectif dans les mémoires 500 et 501 selon des critères de la structure d'échantillonnage conforme à l'invention. Le compteur 509 progresse au rythme de l'échantillonnage fixé par un signal FE issu par exemple de la caméra 1. Outre le code d'adresse d'écriture pour les mémoires 500 et 501, le signal W est dérivé pour valider l'écriture de ces mémoires ; ce signal est appliqué à la commande d'écriture WM des mémoires 500 et 501 par l'intermédiaire de multiplexeurs 530 et 531 à deux positions, commandés respectivement par les signaux KMB et KM. Les signaux KM et KMB proviennent d'une bascule 540 connectée en bout du compteur 509 ; comme la capacité de ce compteur correspond au nombre de points d'une image de haute définition, les signaux KM et KMB changent de valeur à chaque nouvelle image.

L'adressage en lecture des mémoires 500 et 501 est effectué directement au moyen d'un compteur 545 progressant au rythme des signaux provenant d'un diviseur de fréquence 550 divisant par huit le signal FE.

Pour appliquer le code de lecture ou d'écriture on utilise deux multiplexeurs 588 et 589 rattachés respectivement aux mémoires 500 et 501.

Il est facile d'établir pour l'homme de l'art de programmer le circuit de transcodage 510 en se reportant à la structure d'échantillonnage de la figure 6.

Ainsi qu'on vient de le voir, le circuit de sous-échantillonnage 20 fournit au circuit-émetteur 5 les échantillons dans l'ordre dit "ordre normal" suivant :
...E11, E15,... E33, E37,... dans les trames t, t + 2T, t + 4T,...

et les échantillons :

...E12, E16,... E34, E38,... dans les trames $t+T$, $t+3T$, $t+5T$,...

c'est-à-dire que les échantillons sont pris ligne par ligne successivement.

Selon une caractéristique importante de l'invention qui assure la compatibilité précitée le circuit de sous-échantillonnage 20 fournit au circuit émetteur 5 les échantillons dans l'ordre suivant (voir figure 12) dit "ordre compatible" :

...E11, E33, E15,... dans les trames $t+2T$,...

et les échantillons :

...E12, E34, E16,... dans les trames $t+T$, $t+3T$... c'est-à-dire que les échantillons sont pris ligne par ligne alternativement.

La figure 12 rappelle cette ordre compatible où les flèches en traits pleins rejoignent les points pour une première trame et les flèches en tirets, les points d'une deuxième trame. On remarquera que l'on obtient ainsi une organisation en 312 lignes qui s'intercale avec 312 lignes comme en télévision ordinaire et que cet ordre donne bien une analyse régulière puisque les lignes restent bien équidistantes l'une de l'autre. On notera que le système MUSE précité ne pourrait assurer une telle homogénéité de l'analyse pour la compatibilité au cas où celle-ci aurait été prévue. Il va de soi que pour assurer une bonne interpolation pour la restitution d'une image de haute qualité, il faut remettre dans l'ordre normal les échantillons se présentant dans l'ordre compatible ; pour cela on a prévu l'organe de changement d'ordres 53.

La figure 13 montre en détail la structure de l'organe interpolateur 41. Sa structure est proche de celle de l'organe 20, il y a simplement permutation des parties 95 et 100 ; le signal ST est remplacé par un signal ST' issu du circuit récepteur 10.

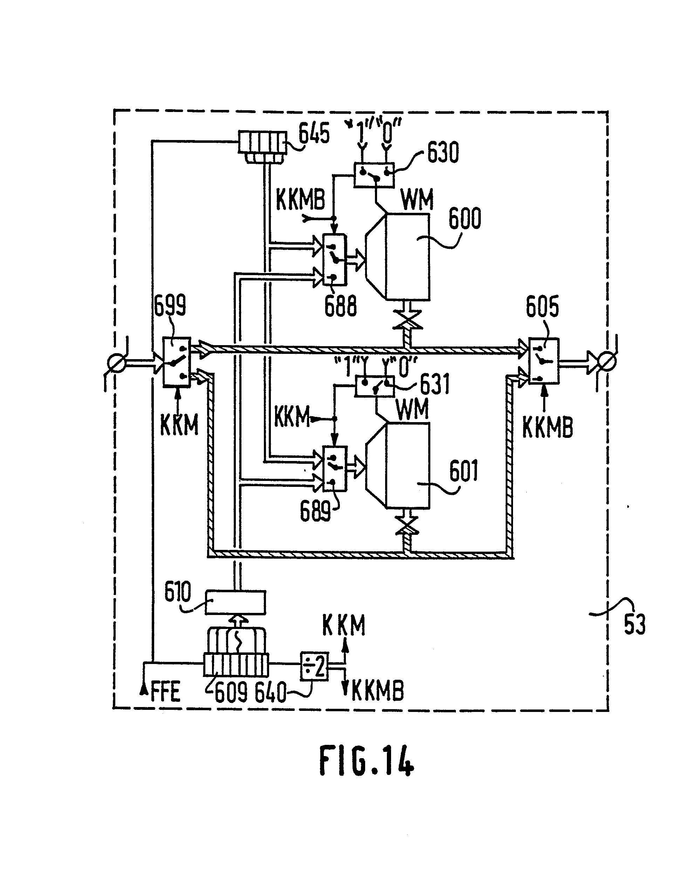

La figure 14 montre en détail la structure de l'organe de changement d'ordre. Cette structure est relative au signal de luminance Y'.

Les échantillons de luminance Y' se présentent à l'entrée d'un démultiplexeur 699 en vue d'être emmagasinés dans l'une des deux mémoires 600 et 601. Cet emmagasinage a lieu tour à tour dans ces deux mémoires, de sorte que lorsqu'une mémoire est en écriture, l'autre mémoire est en lecture. Un multiplexeur 605 permet d'appliquer les informations de l'une des mémoires 600 et 601 à l'entrée du téléviseur 40. La position des démultiplexeur 699 et multiplexeur 605 est fixée respectivement par des signaux complémentaires KKM et KKMB indiquant ainsi que lorsque les informations Y' se trouvent à l'accès de données de la mémoire 600, l'accès de données de la mémoire 601 se trouve en relation avec l'entrée de l'organe 41 et que lorsque l'accès de données de la mémoire 600 est à l'entrée de l'organe 41, les informations Y' sont aux accès de données de la mémoire 601.

L'adressage en écriture de ces mémoires 600 et 601 est effectué au moyen d'un compteur 609 auquel est associé un circuit de transcodage 610, ceci afin d'effectuer un adressage sélectif dans les mémoires 600 et 601 selon des critères qui viennent d'être exposés. Le compteur 609 progresse au rythme de l'échantillonnage fixé par un signal FFE issu par exemple du circuit 10 ; un signal d'écriture "1" est appliqué à la commande d'écriture WM des mémoires 600 et 601 par l'intermédiaire de multiplexeurs 630 et 631 à deux positions, commandés respectivement par les signaux KKMB et KKM. Les signaux KKM et KKMB proviennent d'une bascule 640 connectée en bout du compteur 609 ; comme la capacité de ce compteur correspond au nombre de points d'une image de définition normale, les signaux KKM et KKMB changent de valeur à chaque nouvelle image.

L'adressage en lecture des mémoires 600 et 601 est effectué directement au moyen d'un compteur 645 progressant au rythme des signaux FFE.

Pour appliquer le code de lecture ou d'écriture on utilise deux multiplexeurs 688 et 689 rattachés respectivement aux mémoires 500 et 501.

Il est facile d'établir pour l'homme de l'art le circuit de transcodage 610 en programmant une mémoire morte en fonction des considérations évoquées ci-dessus.

## Revendications

1. Système de transmission d'images de télévision à haute définition par un canal à bande passante étroite, système comportant, d'une part, une partie émission constituée d'un dispositif pour fournir lesdites images constituées par un ensemble de points ou échantillons répartis sur des lignes paires et impaires d'un organe de filtrage pour filtrer lesdits échantillons, d'un circuit d'échantillonnage pour prélever certains échantillons à la sortie de l'organe de filtrage et d'un circuit émetteur pour transmettre sur le canal les échantillons prélevés et d'autre part au moins une partie réception constituée d'un circuit récepteur pour recevoir les échantillons prélevés, d'un organe d'interpolation pour reconstituer des échantillons à partir des échantillons reçus et d'un premier circuit de visualisation pour transformer les échantillons reconstitués en une image restituée de haute définition, caractérisé en ce que le circuit d'échantillonnage est conçu pour prélever sur des lignes de même parité un échantillon sur des successions de n échantillons successifs dans une première trame et l'échantillon suivant de ces successions dans une deuxième trame.

2. Système de transmission d'images de télévision à haute définition par un canal à bande passante étroite selon la revendication 1, caractérisé en ce que n = 4.

3. Système de transmission d'images de télévision à haute définition par un canal à bande passante étroite selon la revendication 1 ou 2, caractérisé en ce que le circuit d'échantillonnage est prévu pour fournir des échantillons au circuit émetteur dans un ordre dit "ordre normal" cet ordre étant défini en considérant les échantillons ligne après ligne successivement.

4. Système de transmission d'images de télévision à haute définition par un canal à bande passante étroite selon la revendication 1 ou 2, caractérisé en ce que le circuit d'échantillonnage est prévu pour fournir des échantillons au circuit émetteur dans un ordre dit "ordre compatible" cet ordre étant défini en considérant les échantillons lignes après lignes alternativement tandis que au moins une partie réception comporte, connecté pratiquement en sortie du circuit récepteur, un deuxième circuit de visualisation pour restituer une image à définition normale et que chaque partie réception comporte un organe de changement d'ordre placé entre le circuit récepteur et l'organe d'interpolation.

5. Emetteur convenant pour le système de transmission d'images de télévision à bande passante étroite selon l'une des revendications 1 à 4, comportant la partie émission du système.

6. Récepteur convenant pour le système de transmission d'images de télévision à bande passante étroite selon l'une des revendications 1 à 4, comportant la partie réception du système.

0 286 157

**FIG.1**

**a**

**b**

**FIG.2**

LP1
LI1
LP2
LI2
LP3
LI3
LP4
LI4

$\square$ : t + 4kT
☆ : t+(4k+1)T
△ : t+(4k+2)T
○ : t+(4k+3)T

**FIG.3**

**FIG. 4**

**FIG. 5**

E10 E11 E12 E13 E14 E15 E16 E17

LP1 ╳ ⊠ ✦ ╳ ╳ ⊠ ✦ ╳

LI1 E20 E21 E22 E23 E24 E25 E26 E27
╳ ╳ ╳ ╳ ╳ ╳ ╳ ╳

E30 E31 E32 E33 E34 E35 E36 E37
LP2 ✦ ╳ ╳ ⊠ ✦ ╳ ╳ ⊠

LI2 E40 E41 E42 E43 E44 E45 E46 E47
╳ ╳ ╳ ╳ ╳ ╳ ╳ ╳

**FIG.6**

□ : t+2kT
✦ : t+(2k+1)T

**FIG.7**

**FIG.8**

FIG.9

FIG.12

FIG.10

0 286 157

5 - VII - PHF 87-520

**FIG.11**

**FIG.13**

FIG.14

Office européen des brevets

# RAPPORT DE RECHERCHE EUROPEENNE

Numero de la demande

EP 88 20 0515

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 146 713 (NHK) <br> * Page 14, ligne 1 - page 15, ligne 4; figure 2 * <br> --- | 1-4 | H 04 N 11/00 |
| A | FR-A-2 302 645 (THOMSON-BRANDT) <br> * Page 2, lignes 8-19 * <br> --- | 1-4 | |
| A | EP-A-0 174 056 (NAGOYA UNIVERSITY) <br> * Page 8, ligne 4 - page 16, ligne 11; figures 2A,2B,3A,3B * <br> ----- | 1-4 | |

**DOMAINES TECHNIQUES RECHERCHES (Int. Cl.4)**

H 04 N

Le présent rapport a été établi pour toutes les revendications

| Lieu de la recherche | Date d'achèvement de la recherche | Examinateur |
|---|---|---|
| LA HAYE | 04-07-1988 | PIGNIEZ T.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P0402)